# EUROPÄISCHE PATENTSCHRIFT

(11) **EP 1 180 313 B1**
(45) Veröffentlichungstag und Bekanntmachung des Hinweises auf die Patenterteilung: **09.03.2005**
(21) Anmeldenummer: 99920534.7
(22) Anmeldetag: 02.06.1999
(51) Int. Cl.: H04Q 7/32, H04Q 7/24

(54) **Verfahren für die Bestellung und Übermittlung von digitalen Medienobjekten zu einem im Zuge der Bestellung übermittelten Ladezeitpunkt, und ein dafür ausgebildetes Kommunikationsendgerät**
Method for the order and transfer of digital media objects at a point of time transferred during the order, and mobile communication terminal adapted therefor
Procédé de commande et de transfert d'objets média digitals à un moment transféré pendant la commande, et terminal mobile de communication y adapté

(43) Veröffentlichungstag der Anmeldung: 20.02.2002
(73) Patentinhaber: Swisscom Mobile AG, 3050 Bern (CH)
(72) Erfinder: HUBER, Adriano, CH-6600 Locarno (CH); CABANO, Claudio, CH-3065 Bolligen BE (CH)
(74) Vertreter: Vogel, Dany
(86) Internationale Anmeldenummer: PCT/CH1999/000240
(87) Internationale Veröffentlichungsnummer: WO 2000/076236

(56) Entgegenhaltungen:
- EP-A- 0 804 012
- WO-A-97/34410

## Beschreibung

Die vorliegende Erfindung betrifft ein Verfahren für die Bestellung und Übermittlung von Medienobjekten und eine dafür geeignete Vorrichtung. Insbesondere betrifft die vorliegende Erfindung ein Verfahren für die Bestellung und Übermittlung von digitalen Medienobjekten und eine dafür geeignete Vorrichtung.

Insbesondere mit der Verbreitung des Internets wurde es immer beliebter, digitale Medienobjekte, beispielsweise digitale Medienobjekte mit Software-, Text-, Grafik-, Bild-, Audio-, Video-, oder kombiniertem Multimedieninhalt, über das Internet anzubieten, vom Intemet herunterzuladen und in einem Personal Computer zwischenzuspeichern, um sie auf ein geeignetes, beispielsweise ein mobiles Medienabspielgerät zu übertragen, beispielsweise mittels einem Datenträger wie Compact Discs, und mittels diesem Medienabspielgerät wiederzugeben oder, wenn der Personal Computer dafür geeignet ist, um sie mittels dem Personal Computer wiederzugeben. Um die benötigten Übertragungszeiten und Speicherkapazitäten für die digitalen Medienobjekte zu reduzieren werden die Medienobjekte typischerweise in komprimierter Form gespeichert und übertragen und vor oder während der Wiedergabe dekomprimiert. Standards für die Speicherung, respektive Komprimierung/Dekomprimierung von digitalen Medienobjekten, beispielsweise MPEG-3 (Moving Picture Expert Group), sind verfügbar und es wird erwartet, dass sie auch in der Zukunft werden weiterentwickelt werden. Viele Benutzer, die zwar an der Wiedergabe von Medienobjekten interessiert wären, empfinden es als zu grosse Einschränkung, dass sie für den Bezug von Medienobjekten ab dem Internet auf einen Personal Computer angewiesen sind, und dass sie für die Wiedergabe der Medienobjekte mittels einem handlichen, mobilen Medienabspielgerät die Medienobjekte zunächst von einem Personal Computer auf dieses Medienabspielgerät übertragen müssen.

In der Patentanmeldung EP 804 012 werden ein Multimedia-Endgerät und ein Verfahren für den Multimedia-Empfang beschrieben, mittels welchen Multimediadaten, beispielsweise MPEG- oder DAB-Daten (Digital Audio Broadcasting), insbesondere über Funknetze empfangen und einem Benutzer wiedergegeben werden können. Das Multimedia-Endgerät gemäss EP 804 012 umfasst ein bidirektionales Kommunikationsendgerät, beispielsweise ein Mobilfunktelefon, mittels dessen Multimedia-Programme über ein Kommunikationsnetzwerk bestellt und in das Multimedia-Endgerät geladen werden können.

Es ist eine Aufgabe dieser Erfindung, ein neues und besseres Verfahren für die Bestellung und Übermittlung von Medienobjekten und eine dafür geeignete Vorrichtung vorzuschlagen, welche insbesondere nicht die oben beschriebenen Nachteile aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Ein digitales Medienobjekt, beispielsweise mit Software-, Text-, Grafik-, Bild-, Audio-, Video-, oder kombiniertem Multimedieninhalt, wird von einer Zentrale über ein Funknetz, beispielsweise ein Funknetz für die mobile Telefonie, ein DAB-Funknetz (Digital Audio Broadcasting), ein satellitenbasiertes Funknetz oder ein anderes Funknetz, an ein mobiles Kommunikationsendgerät übermittelt, wo es in einem Speicher gespeichert wird. Ein Medienabspielmodul dieses Kommunikationsendgeräts gibt einen im gespeicherten Medienobjekt enthaltenen Medieninhalt über ein geeignetes Medium wieder, beispielsweise als Schallwellen mittels einem elektroakustischen Wandler oder als Lichtwellen mittels einer Anzeige. Die Kombination eines Kommunikationsendgeräts, welches digitale Daten von einer Zentrale empfangen kann, mit einem Medienabspielmodul hat den Vorteil, dass mobile Benutzer Medienobjekte empfangen und abspielen können, ohne dabei auf Personal Computers angewiesen zu sein und ohne Medienobjekte selber zwischen verschiedenen Vorrichtungen übertragen zu müssen.

Ein Benutzer bestelt mindestens ein Medienobjekt von mindestens einer Zentrale, indem er mittels des Kommunikationsendgeräts eine Objektbestellung, welche mindestens eine Objektidentifizierung umfasst, über ein Mobilfunknetz. beispielsweise ein GSM-, UMTS- oder ein anderes Mobilnetz, an die Zentrale übermittelt, wobei ein der Objektidentifizierung zugeordnetes Medienobjekt von der Zentrale, an das Kommunikationsendgerät übermittelt wird. Dies hat den Vorteil, dass der Benutzer nicht nur die auf seinem Kommunikationsendgerät abgespeicherten Medienobjekte abspielen kann, sondern dass er zusätzlich auch gezielt und spontan von ihm gewünschte Medienobjekte zur Wiedergabe beziehen kann.

Die oben genannten Ziele werden durch die vorliegende Erfindung insbesondere dadurch erreicht, dass Objektbestellungen für digitale Medienobjekte in der Zentrale entgegengenommen werden und Angaben darüber, welche bestellten Medienobjekte zu welchem von der Zentrale bestimmten Zeitpunkt verfügbar sind, an das betreffende Kommunikationsendgerät übermittelt und die Zeitpunkte dort gespeichert werden, wobei der Zeitpunkt von der Zentrale hinsichtlich optimaler Ausnutzung der bei der Übermittlung von bestellten Medienobjekten verwendeten Ressourcen bestimmt wird, und dass ein betreffendes Kommunikationsendgerät zu einem der bestimmten Zeitpunkte automatisch die Zentrale kontaktiert und die zu diesem bestimmten Zeitpunkt übertragbaren Medienobjekte von der Zentrale bezieht. Dies hat den Vorteil, dass die Zentrale die Auslastung der bei der Übermittlung der Medienobjekte benötigten Resourcen planen kann.

Vorzugsweise wird der Medieninhalt eines Medienobjekts vor der Übermittlung an ein Kommunikationsendgerät mit einem ersten, diesem Medienobjekt zugeordneten Schlüssel verschlüsselt, und vor der Wiedergabe mittels diesem ersten Schlüssel wieder entschlüsselt. Dadurch kann sichergestellt werden, dass unberechtigte Benutzer das betreffende Medienobjekt nicht unberechtigterweise abspielen können, wobei die Zuordnung eines separaten ersten Schlüssels zu jedem Medienobjekt erlaubt, die Benutzung jedes Medienobjekts zu kontrollieren und für jedes Medienobjekt einem Benutzer, beispielsweise gegen entsprechende Bezahlung, einen Schlüssel verfügbar zu machen.

In einer Ausführungsvariante können in einem ersten Kommunikationsendgerät gespeicherte Medienobjekte vom Benutzer dieses ersten Kommunikationsendgeräts selektiert und an ein zweites Kommunikationsendgerät übertragen werden, wobei der Medieninhalt dieses genannten Medienobjekts verschlüsselt bleibt. Dies ermöglicht eine indirekte Verbreitung zwischen Benutzern, ohne dass dabei unberechtigte Benutzer das betreffende Medienobjekt ohne den diesem Medienobjekt zugeordneten Schlüssel abspielen können. Die Übertragung vom ersten Kommunikationsendgerät an das zweite Kommunikationsendgerät erfolgt über eine drahtgebunden oder über eine drahtlose Schnittstelle, beispielsweise eine Infrarotschnittstelle, zum Beispiel eine High Speed Infrared (HSIR)-Schnittstelle oder eine lrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel,eine sogenannte "Bluetooth-Schnittstelle".

Vorzugsweise wird ein erster, einem genannten Medienobjekt zugeordneter Schlüssel mittels eines öffentlichen zweiten Schlüssels verschlüsselt an ein Kommunikationsendgerät übertragen und dort mittels eines privaten dritten Schlüssels entschlüsselt, wobei ein Schlüsselpaar, bestehend aus dem öffentlichen zweiten Schlüssel und dem privaten dritten Schlüssel, jeweils einem betreffenden Benutzer des Kommunikationsendgeräts zugeordnet ist. Dadurch können die jeweils einem Medienobjekt zugeordneten Schlüssel gesichert an einen berechtigten Benutzer übertragen werden, der über den privaten dritten Schlüssel verfügt, der dem für die Verschlüsselung verwendeten öffentlichen zweiten Schlüssel zugehört.

In einer Ausführungsvariante werden separat oder zusammen mit einem ersten, einem Medienobjekt zugeordneten Schlüssel auch Angaben über Benutzungsbedingungen für dieses Medienobjekt an ein Kommunikationsendgerät übertragen. Dadurch können direkt mit dem Schlüssel auch gleich Benutzungsrechte und Preisangaben mitübertragen werden, zum Beispiel Lizenzgebühren und/oder Preisangaben für einmalige und/oder mehrmalige, aber zeitlich beschränkte, Wiedergabe eines betreffenden Medienobjekts, gegebenenfalls zusammen mit einer Angabe über den beschränkten Zeitraum oder eine beschränkte Abspielzahl.

In einer Ausführungsvariante wird für die Entschlüsselung des Medieninhalts eines Medienobjekts der diesem genannten Medienobjekt zugeordnete entschlüsselte erste Schlüssel gesichert einem Entschlüsselungsmodul des Kommunikationsendgeräts übergeben. Das heisst, dass, je nach Ausführung und Integration des Entschlüsselungsmoduls im Kommunikationsendgerät, Massnahmen getroffen werden, damit der entschlüsselte erste Schlüssel bei der Übergabe an das Entschlüsselungsmodul nicht unberechtigterweise gelesen werden kann.

Vorzugsweise enthalten Medienobjekte zusätzlich zum Medieninhalt unverschlüsselte Objektinformationen, welche mittels eines genannten Kommunikationsendgeräts über das Mobilfunknetz von der Zentrale bezogen und auf einer Anzeige des Kommunikationsendgeräts aufgelistet werden können, wobei der Benutzer des Kommunikationsendgeräts mindestens ein Medienobjekt für eine Objektbestellung bestimmt, indem er mittels Bedienungselementen des Kommunikationsendgeräts entsprechende Objektinformationen aus der Liste von angezeigten Objektinformationen selektiert. Unverschlüsselte Objektinformationen umfassen zum Beispiel Preisangaben betreffend das Medienobjekt, eine Bezeichnung des Medienobjekts, beispielsweise den Titel eines Musikstücks oder eines Videos, die Abspieldauer des Medienobjekts, eine kurze Abspielprobe des Medienobjekts, den oder die Interpreten und/oder Autoren des Medienobjekts, und eine Objektidentifizierung des Medienobjekts.

Vorzugsweise enthalten die Objektinformationen eines Medienobjekts Angaben über die Zentrale, wo dieses Medienobjekt bezogen werden kann. Diese Angaben können vom Kommunikationsendgerät beispielsweise dazu benützt werden, die betreffende Zentrale automatisch zu kontaktieren.

Vorzugsweise enthalten die Objektinformationen eines Medienobjekts Angaben über einen Schlüssel-Server, bei welchem verschlüsselte erste Schlüssel bezogen werden können. Dies hat den Vorteil, dass die Schlüssel durch das Kommunikationsendgerät automatisch vom Schlüssel-Senrer bezogen werden können, welcher Schlüssel-Server beispielsweise in der genannten Zentrale oder separat implementiert ist.

In einer Ausführungsvariante wird zur Bezahlung der Abspielung des Medieninhalts eines Medienobjekts ein diesem Medienobjekt zugeordneter Geldbetrag einem vorausbezahlten, auf einer Chipkarte des Kommunikationsendgeräts, beispielsweise eine SIM-Karte (Subscriber Identification Module), gespeicherten Geldbetrag belastet.

In einer Ausführungsvariante wird die Anzahl Abspielungen der Medieninhalte der Medienobjekte im Kommunikationsendgerät gezählt, und diese ermittelte Anzahl an einen Lizenz-Server übermittelt, welcher zum Beispiel in einer genannten Zentrale oder separat implementiert ist. Dies hat den Vorteil, dass dadurch von der Anzahl Abspielungen abhängige Lizenzgebühren verrechnet werden können.

In einer Ausführungsvariante ist der genannte private dritte Schlüssel auf einer Chipkarte des Kommunikationsendgeräts gespeichert, was den Vorteil hat, dass der private Schlüssel vom betreffenden Benutzer aus dem Kommunikationsendgerät entfernt werden kann.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Blockdiagramm, welches schematisch ein Kommunikationsendgerät mit einem Medienabspielmodul illustriert, welches Kommunikationsendgerät über ein Funknetz mit einer Zentrale verbunden ist.
Figur 2 zeigt ein Flussdiagramm, welches schematisch die Verschlüsselung und Entschlüsselung eines Medienobjekts mit einem ersten Schlüssel, sowie die Verschlüsselung dieses ersten Schlüssels mit einem öffentlichen zweiten Schlüssel und die Entschlüsselung dieses ersten Schlüssels mit einem privaten dritten Schlüssels illustriert.

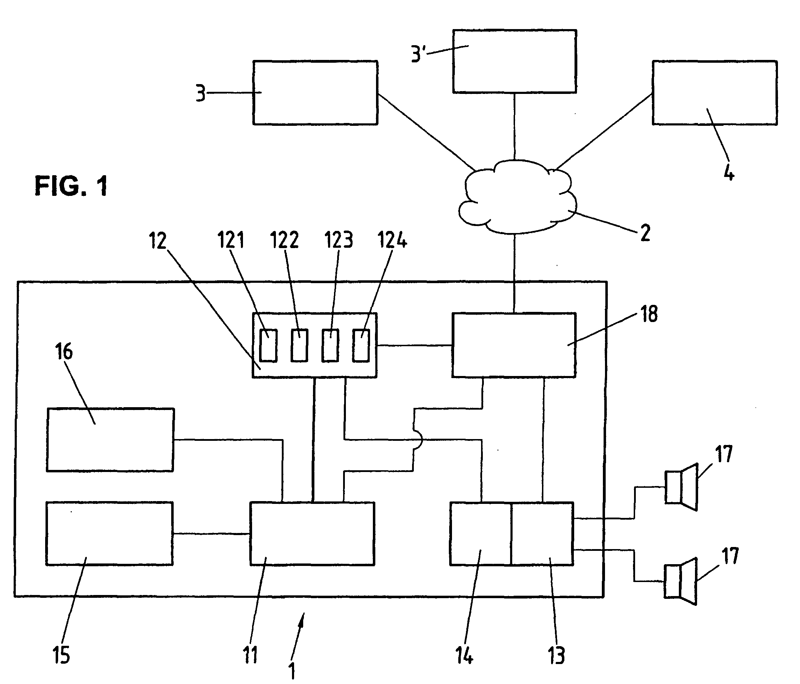

In der Figur 1 bezieht sich das Bezugszeichen 1 auf ein Kommunikationsendgerät, welches mittels einem geeigneten Radiomodul 18 über ein Funknetz 2, welches beispielsweise ein Mobilfunknetz für die mobile Telefonie, zum Beispiel ein GSM-, UMTS- oder ein anderes Mobilfunknetz, ein DAB-Funknetz (Digital Audio Broadcasting), ein satellitenbasiertes Funknetz oder ein anderes Funknetz umfasst, digitale Daten, insbesondere digitale Medienobjekte, zum Beispiel digitale Medienobjekte mit Software-, Text-, Grafik-, Bild-, Audio-, Video-, oder kombiniertem Multimedieninhalt, von einer Zentrale 3 empfangen und in einem geeigneten Speicher 12 für digitale Daten, zum Beispiel in einem RAM (Random Access Memory), auf einer Festspeicherplatte, auf einer Compact Disc oder auf einem anderen beschreibbaren Datenträger speichern kann. Der beschreibbare Datenträger kann beispielsweise auch in Form einer Chipkarte ausgeführt werden, beispielsweise eine SIM-Karte mit erweitertem Speicherbereich oder eine für diesen Zweck geeignete Chipkarte, die beispielsweise über eine Aufnahmestelle entfernbar mit dem Kommunikationsendgerät 1 verbunden werden kann.

An dieser Stelle sollte erwähnt werden, dass die Zentrale 3 nicht direkt an das Funknetz 2 angeschlossen sein muss, sondern dass sie durchaus über andere, nicht dargestellte Vorrichtungen mit dem Funknetz 2 verbunden sein kann. Die Zentrale 3 ist zum Beispiel ein handelsüblicher Kommunikationsserver, der über die nötigen Soft- und Hardwarekomponenten verfügt um, direkt oder indirekt, über das Funknetz 2 Medienobjekte an Kommunikationsendgeräte 1 zu übertragen. Zum Beispiel umfasst die Zentrale 3 einen DAB-Sender (Digital Audio Broadcasting) oder hat Zugang auf einen DAB-Sender oder die Zentrale 3 umfasst eine Kurzmeldungsdienstzentrale (Short Message Service Center, SMSC) oder hat Zugang auf eine Kurzmeldungsdienstzentrale, wodurch programmbegleitende digitale Daten, respektive Kurzmeldungen, beispielsweise SMS- oder USSD-Kurzmeldungen, an das entsprechende Radiomodul 18 des Kommunikationsendgeräts 1 übertragen werden können. Die Zentrale 3 kann so eingerichtet sein, dass sie Daten vom Radiomodul 18 beispielsweise in Kurzmeldungen, zum Beispiel SMS- oder USSD-Kurzmeldungen, beispielsweise über die erwähnte Kurzmeldungsdienstzentrale entgegennehmen kann. Die Zentrale 3 kann beispielsweise auch mit dem Internet verbunden sein, auf welches das Kommunikationsendgerät 1 über ein Mobilfunknetz, beispielsweise ein GSM- oder UMTS-Netz, via einen Internet-Dienstanbieter zugreifen kann. Der Schlüssel-Server 3' und der Lizenz-Server 4, welche später beschrieben werden, können in der Zentrale 3 oder separat, ähnlich wie für die Zentrale 3 beschrieben, implementiert werden.

Wie in der Figur 1 illustriert wird umfasst das Kommunikationsendgerät 1 Verarbeitungsmittel 11, welche mindestens einen Prozessor 11 umfassen, welcher mit dem Radiomodul 18 und dem genannten Speicher 12 verbunden ist und Daten, beispielsweise vom Radiomodul 18 empfangene Daten, in diesem Speichen 2 ablegen, respektive auf im Speicher 12 gespeicherte Daten, insbesondere digitale Medienobjekte, zugreifen und diese verarbeiten kann. Der Prozessor 11 kann im Speicher 12 auch auf programmierte Softwaremodule 121, 122, 123, 124 welche später beschrieben werden, zugreifen und diese programmierten Softwaremodule 121, 122, 123, 124 ausführen.

Der Prozessor 11 ist zudem mit Bedienungselementen 15, beispielsweise eine Tastatur, und mit einer Anzeige 16, beispielsweise eine LCD-Anzeige (Liquid Crystal Display), verbunden um vom Benutzer Befehle und Daten entgegenzunehmen, respektive um Daten, Informationen, insbesondere auch visuelle Medieninhalte von Medienobjekten, und Instruktionen für den Benutzer sichtbar darzustellen.

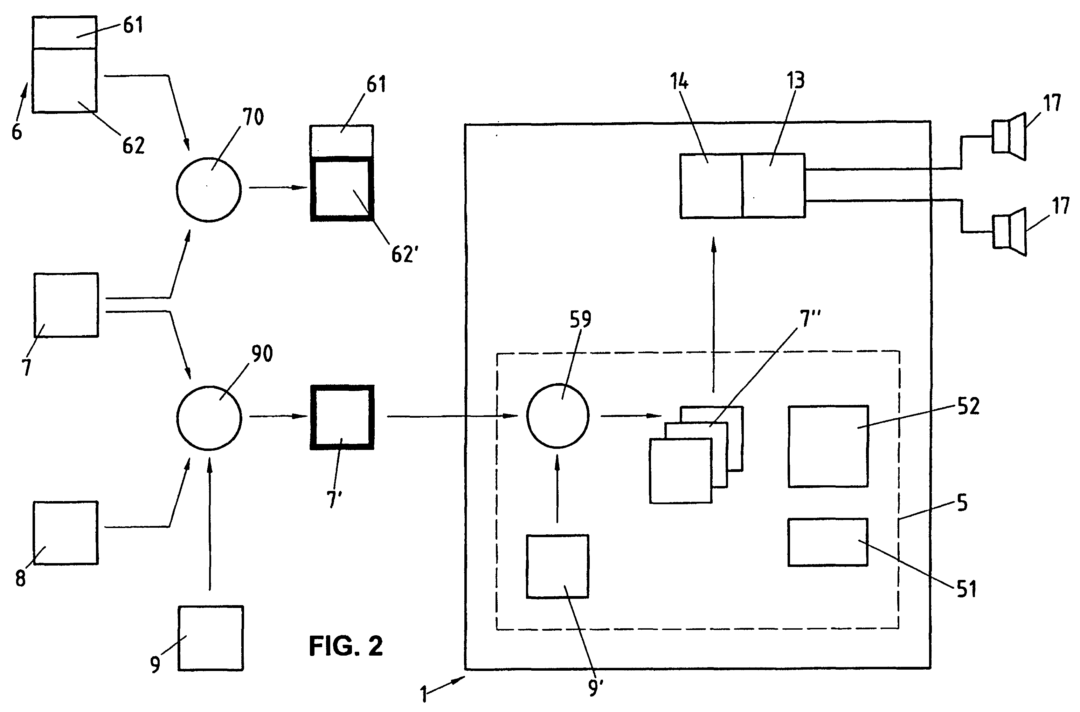

Wie in der Figur 2 illustriert ist umfassen die Medienobjekte 6, wie oben erwähnt, einen Medieninhalt 62 und Objektinformationen 61. Die Objektinformationen 61 enthalten Angaben über das betreffende Medienobjekt 6, beispielsweise Preisangaben betreffend das Medienobjekt 6, eine Bezeichnung des Medienobjekts 6, beispielsweise den Titel eines Musikstücks oder eines Videos, eine Objektidentifizierung des Medienobjekts 6, den Medientyp des Medienobjekts 6, die Abspieldauer des Medienobjekts 6, eine kurze, unverschlüsselte Abspielprobe des Medienobjekts 6, oder den oder die Interpreten und/oder Autoren des Medienobjekts 6. Die Objektinformationen 61 enthalten insbesondere auch Angaben darüber, wo das betreffende Medienobjekt 6 bezogen werden kann, beispielsweise eine Rufnummer, eine Netzwerkadresse oder eine URL-Adresse (Universal Resource Locator) der betreffenden Zentrale 3. Vorzugsweise wird der Medieninhalt 62 des Medienobjekts 6 in komprimierter Form, beispielsweise im MPEG-3 (Moving Picture Expert Group) Format oder in einem anderen geeigneten Format, und verschlüsselt, vorzugsweise mit einem ersten Schlüssel 7, der dem betreffenden Medienobjekt 6 zugeordnet ist, an ein Kommunikationsendgerät 1 übertragen und dort abgespeichert. Die Zuordnung von ersten Schlüsseln 7 zu Medienobjekten 6 hat den Vorteil, dass so der Medieninhalt 62 jedes Medienobjekts 6 mit einem eigenen Schlüssel verschlüsselt werden kann. Die Medienobjekte 6 sind zum Beispiel in einer Datenbank oder in einem File Server der Zentrale 3 mit bereits komprimiertem und verschlüsseltem Medieninhalt abgespeichert, wobei die den Medienobjekten zugeordneten ersten Schlüssel 7 dem oben erwähnten Schlüssel-Server 3' zugänglich abgespeichert sind und der Schlüssel-Server 3' als programmiertes Softwaremodul auf einem Server der Zentrale 3 oder auf einem separaten Server implementiert ist. Vorzugsweise enthalten die oben erwähnten Objektinformationen 61 zudem Angaben darüber, wo erste Schlüssel 7 zur Entschlüsselung des betreffenden Medienobjekts 6 bezogen werden können, beispielsweise eine Rufnummer, eine Netzwerkadresse oder eine URL-Adresse (Universal Resource Locator) des betreffenden Schlüssel-Servers 3'

Wie in der Figur 2 illustriert ist wird der Medieninhalt 62 eines Medienobjekts 6 mittels eines ersten, dem Medienobjekt 6 zugeordneten Schlüssel 7 und einer ersten Verschlüsselungsfunktion 70, welche beispielsweise als programmierte Softwarefunktion in der Zentrale 3 implementiert ist, verschlüsselt. Der verschlüsselte Medieninhalt 62' wird wie oben beschrieben an das Kommunikationsendgerät 1 übertragen. Der erste Schlüssel 7 wird beispielsweise mittels einem betreffenden Benutzer zugeordneten Schlüsselpaar, bestehend aus einem öffentlichen zweiten Schlüssel 9 und einem privaten dritten Schlüssel 9' gesichert übertragen. Der erste Schlüssel 7 wird beispielsweise durch eine zweite Verschlüsselungsfunktion 90, beispielsweise eine programmierte Softwarefunktion in der Zentrale 3 oder im Schlüssel-Server 3', mit dem öffentlichen zweiten Schlüssel 9 verschlüsselt. Der verschlüsselte erste Schlüssel 7' wird, beispielsweise über das oben beschriebene Funknetz 2, an das Kommunikationsendgerät 1 übertragen, wo er durch eine zweite Entschlüsselungsfunktion 59 mit dem privaten dritten Schlüssel 9' entschlüsselt wird. Die verschlüsselten ersten Schlüssel 7' oder die entschlüsselten ersten Schlüssel 7" werden im Kommunikationsendgerät 1 abgespeichert, beispielsweise auf einer Chipkarte 5 des Kommunikationsendgeräts 1, auf welcher Chipkarte 5 sich wenigstens ein Teil des in der Figur 1 dargestellten Speichers 12 befindet, oder von Aussen nicht lesbar im Entschlüsselungsmodul 14, welches später beschrieben wird. Falls die entschlüsselten ersten Schlüssel 7" im Kommunikationsendgerät 1, insbesondere auf der Chipkarte 5, gespeichert werden, sollte der dazu benötigte Speicherbereich für einen Benutzer nicht lesbar sein. Die Chipkarte 5 ist zum Beispiel eine SIM-Karte (Subscriber Identification Module), auf welcher beispielsweise auch ein (oder mehrere) private(r) dritte Schlüssel 9' gespeichert sind. Die Speicherung der verschlüsselten ersten Schlüssel 7', oder der entschlüsselten ersten Schlüssel 7", und der privaten dritten Schlüssel 9' auf einer Chipkarte 5 hat den Vorteil, dass durch die Entfernung dieser Chipkarte 5 aus dem Kommunikationsendgerät 1 der verschlüsselte Medieninhalt 62' von im Kommunikationsendgerät 1 gespeicherten Medienobjekten 6 nicht für unberechtigte Benutzer entschlüsselt und wiedergegeben werden kann. Die zweite Entschlüsselungsfunktion 59 ist beispielsweise eine programmierte Softwarefunktion, die zum Beispiel auf der Chipkarte 5 gespeichert ist und durch einen Prozessor 11, beispielsweise ein Prozessor auf der Chipkarte 5, ausgeführt wird. Die zweite Entschlüsselungsfunktion 59 kann aber auch im Entschlüsselungsmodul 14 integriert sein. Der öffentliche zweite Schlüssel 9 wird beispielsweise auf der Chipkarte 5 gespeichert, beispielsweise eine SIM-Karte, und jeweils bei Anfragen vom Kommunikationsendgerät 1 an die Zentrale 3 oder an den Schlüssel-Server 3' übertragen. Der öffentliche zweite Schlüssel 9 kann auch auf die Initiative der Zentrale 3, respektive des Schlüssel-Servers 3', auf der Chipkarte 5 gelesen werden oder gegebenenfalls von einem TTP-Server (Trusted Third Party) bezogen werden.

Die Entschlüsselung der Medieninhalte 62' von Medienobjekten 6 wird im Entschlüsselungsmodul 14 vorgenommen, welches die in komprimierter Form und verschlüsselt übertragenen und gespeicherten Medieninhalte 62' mittels einem entschlüsselten ersten Schlüssel 7", welcher dem betreffenden Medienobjekt 6 zugeordnet ist, entschlüsselt und den entschlüsselten Medieninhalt an das Medienabspielmodul 13 weiterleitet. Das Medienabspielmodul 13 hat die Funktion entschlüsselte Medienobjekte zu dekomprimieren und, je nach Medientyp, die darin enthaltenen digitalen Daten gegebenenfalls in analoge Signale zu wandeln, welche analogen Signale beispielsweise an elektroakustische Wandler 17 angelegt werden können, zum Beispiel Lautsprecher oder Kopfhörer. Das Entschlüsselungsmodul 14 und das Medienabspielmodul 13 können beispielsweise als programmierte Softwaremodule auf einem dafür geeigneten Signalprozessor, oder als integrierte Schaltkreise auf separaten oder auf einem gemeinsamen Chip implementiert werden. An dieser Stelle sollte erwähnt werden, dass die elektroakustischen Wandler 17 nur als Anwendungsbeispiel zu verstehen sind und dass der Medieninhalt 62 eines Medienobjekts 6, je nach seinem Medientyp, auf unterschiedliche Weise über ein geeignetes Medium wiedergegeben werden kann. So können beispielsweise visuelle Medienobjekte, zum Beispiel Text, Grafiken, Bilder, Videos, virtuelle Realitätssequenzen auf der Anzeige 16 dargestellt und mittels Lichtwellen wiedergegeben werden, wobei zum Beispiel kombinierte Multimedienobjekte über mehrere Medien, mittels Licht- und Schallwellen wiedergegeben werden können.

In der Figur 2 wird zudem illustriert, dass zusätzlich mit dem ersten Schlüssel 7 auch Angaben über Benutzungsbedingungen 8 für das betreffende Medienobjekt 6, dem der betreffende Schlüssel 7 zugeordnet ist, geliefert werden können, welche beispielsweise zusammen mit dem Schlüssel 7 verschlüsselt oder unverschlüsselt an das Kommunikationsendgerät 1 übertragen werden. Diese Angaben über Benutzungsbedingungen 8 können dann im Kommunikationsendgerät 1 zusammen mit den entsprechenden verschlüsselten ersten Schlüssel 7' oder entschlüsselten ersten Schlüsseln 7" gespeichert werden. Die Benutzungsbedingungen 8 beinhalten zum Beispiel Lizenzgebühren und/oder Preisangaben für einmalige und/oder mehrmalige aber zeitlich beschränkte Wiedergabe eines betreffenden Medienobjekts 6, gegebenenfalls zusammen mit einer Angabe über den beschränkten Zeitraum oder eine beschränkte Abspielzahl.

Das oben erwähnte und in der Figur 1 dargestellte Bestellmodul 121 ist ein programmiertes Softwaremodul, welches es einem Benutzer des Kommunikationsendgeräts 1 ermöglicht von der Zentrale 3 unverschlüsselte Objektinformationen 61 über Medienobjekte 6 zu beziehen, diese auf der Anzeige 16 aufzulisten und mittels Bedienungselementen 15 des Kommunikationsendgeräts 1 durchzublättern, gegebenenfalls verfügbare unverschlüsselte Abspielproben wiederzugeben, gewünschte Medienobjekte mittels der Bedienungselemente 15 zu selektieren und entsprechende Objektbestellungen, welche mindestens eine Objektidentifizierung umfassen, an die Zentrale 3 zu übermitteln. Das Bestellmodul 121 ist beispielsweise in der Form eines Browsers implementiert, beispielsweise als Internet-Browser für den direkten Zugriff auf das Internet oder basierend auf WAP (Wireless Application Protocol).

In der Zentrale 3 werden die empfangenen Objektbestellungen gespeichert, und bestellte Medienobjekte 6 von der Zentrale 3 zu einem durch die Zentrale 3 bestimmten Zeitpunkt an das betreffende Kommunikationsendgerät 1 übermittelt. Gemäss der vorliegenden Erfindung werden Objektbestellungen in der Zentrale 3 entgegengenommen und Angaben darüber, welche bestellten Medienobjekte 6 zu welchem von der Zentrale 3 bestimmten Zeitpunkt verfügbar sind, an das betreffende Kommunikationsendgerät 1 übermittelt Das Bestellmodul 121 des betreffenden Kommunikationsendgeräts 1 nimmt den von der Zentrale 3 bestimmten Zeitpunkt für die Übermittlung von bestellten Medienobjekten 6 entgegen, speichert ihn ab und kontaktiert zum abgespeicherten Zeitpunkt automatisch die betreffende Zentrale 3 und bezieht dort die zum bestimmten Zeitpunkt übertragbaren Medienobjekte 6. Der Zeitpunkt für die Übermittlung wird von der Zentrale 3 so bestimmt, dass dabei verwendete Ressourcen, beispielsweise die Kapazität des Funknetzes 2 oder die Datenbank, respektive der File-Server der Zentrale 3, möglichst optimal ausgenutzt werden. Mit der Auslieferung eines Medienobjekts 6 kann auch gleichzeitig der diesem Medienobjekt zugeordnete erste Schlüssel 7 übermittelt werden, oder dieser Schlüssel 7 kann, wie später beschrieben wird, separat übermittelt werden. Die Übermittlung von bestellten Medienobjekten 6 kann als Hintergrundprozess implementiert werden, wobei bestellte Medienobjekte 6, beispielsweise parallel zu einem Telefongespräch, über einen separaten Datenkanal durchgeführt werden. An dieser Stelle sollte zudem erwähnt werden, dass es für einen Benutzer auch möglich sein kann, die sofortige Übermittlung von bestellten Medienobjekten 6 zu verlangen, wobei dies beispielsweise über ein entsprechendes Tarifmodul mit höheren Gebühren verbunden werden kann.

Als Alternative zum Bestellen von Medienobjekten 6 mittels dem beschriebenen Bestellmodul 121, kann ein Benutzer beispielsweise auch Medienobjekte 6 abonnieren, beispielsweise indem er von ihm spezifizierte Medienobjekte 6, zum Beispiel die neusten Medienobjekte 6 mit Medieninhalten 62 eines bestimmten Künstlers, in einem zeitlich begrenzten Abonnement oder zeitlich unbegrenzt bis auf Widerruf von einem Betreiber einer Zentrale 3 anfordert.

Für den Rückkanal zur Zentrale 3 verfügt das Radiomodul 18 über einen geeigneten Sender und weitere Komponenten um über das Funknetz 2 mit der Zentrale 3 zu kommunizieren, beispielsweise verfügt das Radiomodul 18 über die Funktionalität eines Mobilfunktelefonkommunikationsmoduls, zum Beispiel über ein GSM- oder UMTS-Modul um über GSM- oder UMTS-Netze direkt mit der Zentrale 3 bidirektional zu kommunizieren, respektive um über einen Internet-Dienstanbieter auf die mit dem Internet verbundene Zentrale 3 zuzugreifen.

Das Schlüsselbezugsmodul 122 ist ein weiteres programmiertes Softwaremodul, welches ermöglicht einen oben erwähnten ersten Schlüssel 7, der einem betreffenden Medienobjekt 6 zugeordnet ist und für die Entschlüsselung des Medieninhalts 62' dieses betreffenden Medienobjekts 6 nötig ist, vom oben erwähnten Schlüssel-Server 3' zu beziehen, wobei das Schlüsselbezugsmodul 122 für diesen Zweck den oben erwähnten öffentlichen zweiten Schlüssel 9 an den Schlüssel-Server 3' übermitteln kann. Das Schlüsselmodul 123 kann beispielsweise vom Bestellmodul 122 dazu benützt werden um für ein bezogenes Medienobjekt 6 automatisch den diesem Medienobjekt 6 zugeordneten ersten Schlüssel 7, und die zusammen mit diesem verschlüsselten Schlüssel 7' oder separat übertragenen Angaben über die Benutzungsbedingungen 8 für dieses Medienobjekt 6 zu beziehen, wobei die in den Objektinformationen 61 des betreffenden Medienobjekts 6 gespeicherten Angaben über den zuständigen Schlüssel-Server 3' benutzt werden. Die Zuordnung eines ersten Schlüssels 7 zum betreffenden Medienobjekt 6 kann beispielsweise so erfolgen, dass das Schlüsselbezugsmodul 122 die vom Bestellmodul 121 erhaltene Objektidentifizierung an den Schlüssel-Server 3' übermittelt und den in der entsprechenden Transaktion vom Schlüssel-Server 3' erhaltenen ersten Schlüssel 7', der wie oben beschrieben entschlüsselt wird, bei der Abspeicherung im Kommunikationsendgerät 1 diesem betreffenden Medienobjekt 6 zuordnet. In einer weiteren Ausführungsvariante kann zusammen mit dem ersten Schlüssel 7, beispielsweise als Bestandteil des Schlüssels 7, die Objektidentifizierung des Medienobjekts 6, dem der Schlüssel 7 in der Zentrale 3 zugeordnet ist, an das Kommunikationsendgerät 1 übertragen werden.

Das Objektverwaltungsmodul 124 ist ein weiteres programmiertes Softwaremodul, welches vom Benutzer des Kommunikationsendgeräts 1, zum Beispiels mittels den Bedienungselementen 15, aufgestartet werden kann um im Speicher 12 gespeicherte Medienobjekte 6 zu verwalten. Die Steuerung des Objektverwaltungsmodul 124 erfolgt vom Benutzer mittels den Bedienungselementen 15 des Kommunikationsendgeräts 1, beispielsweise anhand von Menüoptionen die in der Anzeige 16 des Kommunikationsendgeräts 1 angezeigt werden. Das Objektverwaltungsmodul 124 erlaubt beispielsweise das Auflisten und Sortieren von gespeicherten Medienobjekten 6, sowie die Selektion von aufgelisteten Medienobjekten 6 zum Abspielen oder Löschen derselben. Das Objektverwaltungsmodul 124 umfasst beispielsweise auch eine programmierte Übertragungsfunktion um ein selektiertes Medienobjekt 6 mittels dem Radiomodul 18 oder mittels einer nicht dargestellten drahtgebundenen oder drahtlosen Schnittstelle an ein zweites Kommunikationsendgerät 1 zu übertragen, wobei in dieser Übertragung der Medieninhalt 62 des Medienobjekts 6 verschlüsselt bleibt und ein erster, diesem Medienobjekt zugeordneter Schlüssel 7 vom zweiten Kommunikationsendgerät 1, wie beschrieben, vom Schlüssel-Server 3' bezogen werden muss. Die erwähnte drahtlose Schnittstelle ist beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle".

Wenn ein Medienobjekt 6 zum Abspielen selektiert wird, wird der Medieninhalt 62' des selektierten Medienobjekts 6, sowie der diesem Medienobjekt 6 zugeordnete verschlüsselte erste Schlüssel 7' oder der entsprechende entschlüsselte erste Schlüssel 7" dem Entschlüsselungsmodul 14 übergeben. An dieser Stelle sollte erwähnt werden, dass die Speicherung und die Übergabe der entschlüsselten ersten Schlüssel 7" an das Entschlüsselungsmodul 14 derart gesichert erfolgt, dass die Schlüssel 7" nicht unberechtigterweise gelesen und kopiert werden können. Zum Beispiel können nur die verschlüsselten ersten Schlüssel 7' im Kommunikationsendgerät 1, beispielsweise auf der Chipkarte 5, gespeichert werden und jeweils erst vor der Übergabe an das Entschlüsselungsmodul 14, wie oben beschrieben, in der zweiten Entschlüsselungsfunktion 59 entschlüsselt werden. Die gesicherte Übergabe der entschlüsselten ersten Schlüssel 7" an das Entschlüsselungsmodul 14 erfolgt beispielsweise durch eine weitere Verschlüsselung oder dadurch, dass die zweite Entschlüsselungsfunktion 59 direkt im Entschlüsselungsmodul 14 implementiert ist, so dass von ausserhalb des Entschlüsselungsmoduls 14 keine entschlüsselten Schlüssel 7" lesbar sind.

An dieser Stelle sollte auch erwähnt werden, dass Medienobjekte 6 in einem speziellen Modus, der beispielsweise vom Benutzer gewählt werden kann, beim Empfang im Kommunikationsendgerät 1 nicht als Objekt abgespeichert werden, sondern dass deren Medieninhalt 62' über einen Pufferspeicher zur Wiedergabe an das Entschlüsselungsmodul 14 geleitet wird (zusammen mit dem diesem Medienobjekt 6 zugeordneten verschlüsselten ersten Schlüssel 7' oder dem entsprechenden entschlüsselten ersten Schlüssel 7"), wobei dieser spezielle Stream-Modus nur dann durchführbar ist, wenn die Übertragungsgeschwindigkeit, respektive -kapazität, des Funknetzes 2 dafür ausreicht.

Für die Verrechnung des Bezugs und der Abspielung von Medienobjekten 6 gibt es verschiedene Varianten, die eine vorausgehende oder nachträgliche Bezahlung erlauben. Zum Beispiel kann die oben erwähnte Chipkarte 5 einen im vorausbezahlten Geldbetragswert 51 enthalten, von welchem beispielsweise beim Bezug von jedem Medienobjekt 6, oder von jedem ersten Schlüssel 7, und bei jedem Abspielen eines Medienobjekts 6, respektive bei jeder Verwendung eines ersten Schlüssels 7", ein Betrag abgezogen wird, der beispielsweise den in den beschriebenen Objektinformationen 61 oder Benutzungsbedingungen 8 enthaltenen Preisangaben entspricht. Diese Verrechnung und Belastung kann beispielsweise durch ein Verrechnungsmodul 123, ein programmiertes Softwaremodul, durchgeführt werden. Dieses Verrechnungsmodul 123 kann aber auch so ausgeführt werden, dass zu belastende Beträge, beispielsweise mittels dem Radiomodul 8, an eine nicht dargestellte Clearingeinheit zur weiteren Verrechnung durch schriftliche Rechnungsstellung, beispielsweise als Teil der Telefonrechnung, oder durch Belastung eines Bankkontos weiterleitet.

Zur Verrechnung der Lizenzgebühren für die Urheberrechte an den Medienobjekten 6 wird die Wiedergabe jedes Medienobjekts im Kommunikationsendgerät 1 gezählt, beispielsweise durch entsprechende programmierte Softwarefunktionen im Lizenzmodul 52, welches beispielsweise auf der Chipkarte 5 gespeichert ist, und in welchem die ermittelte Anzahl Wiedergaben vom Benutzer nicht überschrieben werden kann. Diese Zählung erfolgt spezifisch für jedes Medienobjekt 6, beispielsweise bei jeder Verwendung eines ersten Schlüssels 7", die dem Lizenzmodul 52 zum Beispiel vom Entschlüsselungsmodul 14 mitgeteilt wird. Die ermittelte Anzahl Wiedergaben wird, beispielsweise periodisch, zum Beispiel täglich, oder jeweils beim Erreichen eines vordefinierten Zählerstands, zum Beispiel mittels des Radiomoduls 18, zur Weiterverarbeitung an einen Lizenz-Server 4 übermittelt, der in der Zentrale 3 oder auf einem separaten Computer implementiert ist.

Zu verrechnende Beträge können auch auf die effektive Abspieldauer bezogen werden, so dass ein Benutzer nur für die tatsächlich ausgeführte Wiedergabezeit belastet wird. Um diese effektive Abspieldauer fälschungssicher zu bestimmen braucht es eine Zeitreferenz, die vom Benutzer des Kommunikationsendgeräts 1 nicht manipuliert werden kann und einen gesicherten Speicherbereich, der vom Benutzer nicht überschrieben werden kann.

Der Fachmann wird verstehen, dass es verschiedene Möglichkeiten gibt die Speicherung von Daten, insbesondere Medienobjekte 6 und Schlüssel, und von programmierten Softwarefunktionen und -modulen im Kommunikationsendgerät 1 zu organisieren, das heisst auf verschiedene Speichermittel 12 aufzuteilen, und programmierte Softwarefunktionen und Softwaremodulen für deren Ausführung verschiedenen Verarbeitungsmitteln 11, das heisst verschiedenen von mehreren möglichen Prozessoren, zuzuweisen.

Neben der Verrechnung für den Bezug von Schlüsseln und/oder Medienobjekten sowie für die Wiedergabe dieser Medienobjekte kann es auch interessant sein erfindungsgemässe Kommunikationsendgeräte 1 zu verkaufen oder zu vermieten oder Erweiterungsmodule für konventionelle Kommunikationsendgeräte, beispielsweise Mobilfunktelefone oder kommunikationsfähige Laptop- oder Palmtop-Computer, zu verkaufen, welche Erweiterungsmodule, beispielsweise in der Form einer Chipkarte, solche konventionellen Kommunikationsendgeräte so erweitern, dass sie wie ein erfindungsgemässes Kommunikationsendgerät 1 eingesetzt werden können. Es kann auch interessant sein Datenträger mit darauf gespeicherten programmierten Softwaremodulen zu vertreiben, welche Softwaremodule einen konventionellen Kommunikationsserver so steuern, dass sie wie beschriebene Zentralen 3, Schlüssel-Server 3', und Lizenz-Server 4 eingesetzt werden können.

## Patentansprüche

1. Verfahren für die Bestellung und Übermittlung von digitalen Medienobjekten (6),
in welchem Verfahren mittels eines mobilen Kommunikationsendgeräts (1) eine Objektbestellung für digitale Medienobjekte (6), welche mindestens eine Objektidentifizierung umfasst, über ein Mobilfunknetz (2) an eine Zentrale (3) übermittelt wird,
in welchem Verfahren Angaben über einen von der Zentrale (3) bestimmten Zeitpunkt, zu welchem ein bestelltes Medienobjekt (6) verfügbar ist, von der Zentrale (3) an das Kommunikationsendgerät (1) übermittelt werden, wobei der Zeitpunkt von der Zentrale (3) hinsichtlich optimaler Ausnutzung der bei der Übermittlung von bestellten Medienobjekten (6) verwendeten Ressourcen bestimmt wird,
in welchem Verfahren der von der Zentrale (3) bestimmte Zeitpunkt im Kommunikationsendgerät (1) gespeichert wird,
in welchem Verfahren das Kommunikationsendgerät (1) zum abgespeicherten Zeitpunkt automatisch die Zentrale (3) kontaktiert,
in welchem Verfahren ein der Objektidentifizierung zugeordnetes Medienobjekt (6) von der Zentrale (3), über ein Funknetz (2), an das Kommunikationsendgerät (1) übermittelt wird, wo es in einem Speicher (12) gespeichert wird, und
in welchem Verfahren ein Medienabspielmodul (13) des Kommunikationsendgeräts (1) einen im gespeicherten Medienobjekt (6) enthaltenen Medieninhalt (62) über ein geeignetes Medium wiedergibt.

2. Verfahren gemäss Anspruch 1, **dadurch gekennzeichnet, dass** der Medieninhalt (62) des Medienobjekts (6) vor der Übermittlung an das Kommunikationsendgerät (1) mit einem ersten, diesem Medienobjekt (6) zugeordneten Schlüssel (7) verschlüsselt wird, und dass der Medieninhalt (62), vor der Wiedergabe durch das Medienabspielmodul (13), mittels diesem ersten Schlüssel (7") entschlüsselt wird.

3. Verfahren gemäss Anspruch 2, **dadurch gekennzeichnet, dass** in einem ersten genannten Kommunikationsendgerät (1) gespeicherte Medienobjekte (6) vom Benutzer dieses ersten Kommunikationsendgeräts (1) selektiert und an ein zweites genanntes Kommunikationsendgerät (1) übertragen werden, wobei der Medieninhalt (62) dieser Medienobjekte (6) verschlüsselt bleibt.

4. Verfahren gemäss einem der Ansprüche 2 oder 3, **dadurch gekennzeichnet, dass** der erste, dem Medienobjekt (6) zugeordnete Schlüssel (7) mittels einem öffentlichen zweiten Schlüssel (9) verschlüsselt an das betreffende Kommunikationsendgerät (1) übertragen und dort mittels einem privaten dritten Schlüssel (9') entschlüsselt wird, wobei das Schlüsselpaar, bestehend aus dem öffentlichen zweiten Schlüssel (9) und dem privaten dritten Schlüssel (9'), dem Benutzer des betreffenden Kommunikationsendgeräts (1) zugeordnet ist.

5. Verfahren gemäss Anspruch 4, **dadurch gekennzeichnet, dass** separat oder zusammen mit dem erstem, dem Medienobjekt (6) zugeordneten Schfüssel (7) auch Angaben über Benutzungsbedingungen (8) für dieses Medienobjekt (6) an das Kommunikationsendgerät (1) übertragen werden.

6. Verfahren gemäss einem der Ansprüche 4 oder 5, **dadurch gekennzeichnet, dass** für die Entschlüsselung des Medieninhalts (62) des Medienobjekts (6) der diesem Medienobjekt (6) zugeordnete entschlüsselte erste Schlüssel (7") gesichert einem Entschlüssefungsmodul (14) des Kommunikationsendgeräts (1) übergeben wird.

7. Verfahren gemäss einem der Ansprüche 1 bis 6, **dadurch gekennzeichnet, dass** die Medienobjekte (6) jeweils Angaben über die Zentrale (3) enthalten, wo das betreffende Medienobjekt (6) bezogen werden kann.

8. Verfahren gemäss einem der Ansprüche 2 bis 7, **dadurch gekennzeichnet, dass** die Medienobjekte (6) jeweils Angaben über einen Schlüssel-Server (3') enthalten, bei welchem der verschlüsselte erste Schlüssel (7') bezogen werden kann.

9. Verfahren gemäss Anspruch 8, **dadurch gekennzeichnet, dass** ein Schlüsselbezugsmodul (122) des betreffenden Kommunikationsendgeräts (1) den verlschlüsselten ersten Schlüssel (7') jeweils automatisch vom Schlüssel-Server (3') anfordert, entgegennimmt und abspeichert.

10. Verfahren gemäss einem der Ansprüche 1 bis 9, **dadurch gekennzeichnet. dass** die Medienobjekte (6) jeweils Angaben betreffend den Medieninhalt (62) des Medienobjekts (6) enthalten, beispielsweise Preisangaben. Titelangaben, Abspieldauer oder eine Abspielprobe.

11. Verfahren gemäss einem der Ansprüche 1 bis 10, **dadurch gekennzeichnet, dass** zur Bezahlung der Abspielung des Medieninhalts (62) des Medienobjekts (6) ein diesem Medienobjekt (6) zugeordneter Geldbetrag einem vorausbezahlten, auf einer Chipkarte (5) des betreffenden Kommunikationsendgeräts (1) gespeicherten Geldbetrag (51) belastet wird.

12. Verfahren gemäss einem der Ansprüche 1 bis 11, **dadurch gekennzeichnet, dass** die Anzahl Abspielungen des Medieninhalts (62) des Medienobjekts (6) im betreffenden Kommunikationsendgerät (1) gezählt wird, und dass diese Anzahl an einen Lizenz-Server (4) übermittelt wird.

13. Mobiles Kommunikationsendgerät (1), welches so ausgebildet ist, dass es über Funknetze (2) verbreitete Daten empfangen kann, und welches mindestens einen Prozessor (11) und damit verbundene Speichermittel (12) umfasst, wobei mindestens gewisse der Speichermittel (12) so dimensioniert sind, dass sie über eines dieser Funknetze (2) empfangene digitale Medienobjekte (6) speichern können, wobei das Kommunikationsendgerät (1) so eingerichtet ist, dass es über ein Mobilfunknetz (2) kommunizieren kann, wobei das Kommunikationsendgerät (1) ein programmiertes Bestellmodul (121) umfasst, das so ausgebildet ist, dass es eine Objektbestellung für digitale Medienobjekte (6), welche mindestens eine Objektidentifizierung umfasst, über das Mobilfunknetz (2) an eine Zentrale (3) übermitteln kann, und wobei das Kommunikationsendgerät (1) ein Medienabspielmodul (13) umfasst, Welches so ausgebildet ist, dass es einen in einem der digitalen Medienobjekte (6) enthaltenen Medieninhalt (62) über ein geeignetes Medium wiedergibt, **dadurch gekennzeichnet,**
**dass** das Bestellmodul (121) so ausgebildet ist, dass es einen von der Zentrate (3) bestimmten und an das Kommunikationsendgerät (1) übermittelten Zeitpunkt, zu welchem ein bestelltes Medienobjekt (6) verfügbar ist, entgegennimmt und abspeichert, und
**dass** das Bestellmodul (121) so ausgebildet ist, dass es zum abgespeicherten Zeitpunkt automatisch die Zentrale (3) kontaktiert und ein der Objektidentifizierung zugeordnetes Medienobjekt (6), das von der Zentrale (3) über das Funknetz (2) an das Kommunikationsendgerät (1) übermittelt wird, in den Speichermitteln (12) speichert.

14. Kommunikationsendgerät (1) gemäss Anspruch 13, **dadurch gekennzeichnet, dass** es ein Entschlüsselungsmodul (14) umfasst, welches so ausgebildet ist, dass es den verschlüsselten Medieninhalt (62') des Medienobjekts (6), mittels einem ersten, diesem Medienobjekt (6) zugeordneten Schlüssel (7) entschlüsselt.

15. Kommunikationsendgerät (1) gemäss Anspruch 14, **dadurch gekennzeichnet, dass** es eine Übertragungsfunktion umfasst, welche so ausgebildet ist, dass sie gespeicherte Medienobjekte (6) an ein zweites mobiles Kommunikationsendgerät (1) überträgt, wobei der Medieninhalt (62') dieser Medienobjekte (6) verschlüsselt bleibt.

16. Kommunikationsendgerät (1) gemäss einem der Ansprüche 14 bis 15, **dadurch gekennzeichnet, dass** es ein Schlüsselbezugsmodul (122) umfasst, welches so ausgebildet ist, dass es einen ersten, dem genannten Medienobjekt (6) zugeordneten Schlüssel (7) über das Mobilfunknetz (2) von einem Schlüssel-Server (3') bezieht, und dass das Kommunikationsendgerät (1) eine zweite Entschlüsselungsfunktion (59) umfasst, welche so ausgebildet ist, dass sie den empfangenen ersten Schlüssel (7'), der mit einem öffentlichen zweiten Schlüssel (9) verschlüsselt ist, mittels einem privaten dritten Schlüssel (9') entschlüsselt, wobei das Schlüsselpaar, bestehend aus dem öffentlichen zweiten Schlüssel (9) und dem privaten dritten Schlüssel (9'). dem Benutzer des Kommunikationsendgeräts (1) zugeordnet ist.

17. Kommunikationsendgerät (1) gemäss Anspruch 16, **dadurch gekennzeichnet, dass** das Schlüsselbezugsmodul (122) so ausgebildet ist, dass es separat oder zusammen mit dem ersten, dem Medienobjekt (6) zugeordneten Schlüssel (7) auch Angaben über Benutzungsbedingungen (8) für dieses Medienobjekt bezieht.

18. Kommunikationsendgerät (1 ) gemäss einem der Ansprüche 16 oder 17, **dadurch gekennzeichnet, dass** die zweite Entschlüsselungsfunktion (59) so ausgebildet ist, dass sie den entschlüsselten ersten Schlüssel (7") gesichert dem Entschlüsselungsmodul (14) übergibt.

19. Kommunikationsendgerät (1) gemäss einem der Ansprüche 16 bis 18, **dadurch gekennzeichnet, dass** das Schlüsselbezugsmodul (122) so ausgebildet ist, dass es den verschlüsselten ersten Schlüssel (7') auf Grund von Angaben über den Schlüssel-Server (3'). welche Angaben jeweils im Medienobjekt (6) enthalten sind, automatisch vom Schlüssel-Server (3') bezieht.

20. Kommunikationsendgerät (1) gemäss einem der Ansprüche 13 bis 19, **dadurch gekennzeichnet, dass** es ein Verrechnungsmodul (123) umfasst, welches so ausgebildet ist, dass es bei der Wiedergabe des Medieninhalts (62) des Medienobjekts (6) einen diesem Medienobjekt (6) zugeordneten Geldbetrag einem vorausbezahlten, auf einer Chipkarte (5) des Kominunikationsendgeräts (1) gespeicherten Geldbetrag (51) belastet.

21. Kommunikationsendgerat (1) gemäss einem der Ansprüche 13 bis 20, **dadurch gekennzeichnet, dass** es ein Lizenzmodul (52) umfasst, welches so ausgebildet ist, dass es die Anzahl Abspielungen des Medieninhalts (62) des Medienobjekts (6) im Kommunikationsendgerät (1) zählt und diese Anzahl an einen Lizenz-Server (4) übermittelt.

22. Kommunikationsendgerät (1) gemäss einem der Ansprüche 13 bis 21, **dadurch gekennzeichnet, dass** die Speichermittel (12) mindestens gewisse Speicherplätze auf einer Chipkarte (5) umfassen, und dass der private dritte Schlüssel (9') in den gewissen Speicherplätzen gespeichert ist.

## Claims

1. A method for ordering and transmitting digital media objects (6),
in which method an object order for digital media objects (6) that comprises at least one object identification is transmitted by means of a mobile communications terminal over a mobile radio network (2) to a center (3),
in which method data about a time, determined by the center (3), at which an ordered media object (6) is available are transmitted by the center (3) to the communications terminal (1), the time being determined by the center (3) with regards to optimal usage of resources used for the transmission of ordered media objects (6),
in which method the time, determined by the center (3), is stored in the communications terminal (1),
in which method the communications terminal (1) automatically contacts the center (3) at the stored time,
in which method a media object (6) assigned to the object identification is transmitted by the center (3) via a radio network (2) to the communications terminal (1), where it is stored in a memory (12), and
in which method a media playback module (13) of the communications terminal (1) plays back a media content (62) contained in the stored media object (6).

2. The method according to claim 1, wherein prior to transmission to the communications terminal (1), the said media content (62) of the media object (6) is encrypted with a first key (7), assigned to this said media object (6), and the media content (62) is decrypted by means of this first key (7") prior to playback through the media playback module (13).

3. The method according to claim 2, wherein media objects stored in a first said communications terminal (1) are selected by the user of this first communications terminal (1) and are transmitted to a second said communications terminal (1), the media content (62) of these media objects (6) remaining encrypted.

4. The method according to one of the claims 2 or 3, wherein the first key (7), assigned to the media object (6), is transmitted, encrypted by means of a public second key (9), to the respective communications terminal (1) and is decrypted there by means of a private third key (9'), the pair of keys, consisting of the public second key (9) and the private third key (9'), being assigned to the user of the respective communications terminal (1).

5. The method according to claim 4, wherein data about conditions of use (8) for the media object (6) are also sent to the communications terminal (1) separately or together with the first key (7) assigned to this media object (6).

6. The method according to one of the claims 4 or 5, wherein, for the decryption of the media content (62) of the media object (6), the decrypted first key (7") assigned to this media object (6) is transmitted in a protected way to a decryption module (14) of the communications terminal (1).

7. The method according to one of the claims 1 to 6, wherein the media objects (6) contain in each case indications about the center (3) where the respective media object (6) can be obtained.

8. The method according to one of the claims 2 to 7, wherein the media objects (6) contain in each case indications about a key server (3') from which the encrypted first key (7') can be obtained.

9. The method according to claim 8, wherein a key obtaining module (122) of the respective communications terminal (1) automatically requests, receives and stores the encrypted first key (7') in each case from the key server (3') .

10. The method according to one of the claims 1 to 9, wherein the media objects (6) contain in each case indications concerning the media content (62) of the media object (6), for example price information, title indications, playing duration or a sample playback.

11. The method according to one of the claims 1 to 10, wherein as payment for the playback of the media content (62) of the media object (6) a monetary amount assigned to this media object (6) is debited against a prepaid monetary amount (51) stored on a chipcard (5) of the respective communications terminal (1).

12. The method according to one of the claims 1 to 11, wherein the number of playbacks of said media content (62) of the media object (6) is counted in the respective communications terminal (1), and this number is transmitted to a license server (4).

13. A mobile communications terminal (1) which is designed such that it is able to receive data disseminated over radio networks (2), and which comprises at least one processor (11) and memory means (12) connected thereto, at least certain of the memory means (12) being designed such that they are able to store digital media objects (6) received over one of the radio networks (2), the communications terminal (1) being set up such that it is able to communicate over a mobile radio network (2), the communications terminal (1) comprising a programmed order module (121) that is designed such that it is able to transmit an object order for digital media objects (6), comprising at least one object identification, over the mobile radio network (2) to a center (3), and the communications terminal (1) comprising a media playback module (13) which is designed such that it plays back a media content (62) contained in one of the digital objects (6) via a suitable medium, wherein
the order module (121) is designed such that it receives and stores a time, determined by the center (3) and transmitted to the communications terminal (1), at which an ordered media object (6) is available, and
the order module (121) is designed such that it automatically contacts the center (3) at the stored time and stores in the memory means (12) a media object (6) assigned to the object identification which object is transmitted by the center (3) via the radio network (2) to the communications terminal (1).

14. The communications terminal (1) according to claim 13, wherein it comprises a decryption module (14) which is designed such that it decrypts the encrypted media content (62') of the media object (6) by means of a first key (7) assigned to this media object (6).

15. The communications terminal (1) according to claim 14, wherein it comprises a transmission function which is designed such that it transmits stored media objects (6) to a second mobile communications terminal (1), the media content (62') of these media objects (6) remaining encrypted.

16. The communications terminal (1) according to one of the claims 14 to 15, wherein it comprises a key obtaining module (122) which is designed such that it obtains a first key (7), assigned to the said media object (6), from a key server (3') via the mobile radio network (2), and the communications terminal (1) comprises a second decryption function (59) which is designed such that it decrypts, by means of a private third key (9'), the received first key (7') that is encrypted with a public second key (9), the pair of keys, consisting of the said public second key (9) and the private third key (9'), being assigned to the user of the communications terminal (1).

17. The communications terminal (1) according to claim 16, wherein, the key obtaining module (122) is designed such that, separately or together with the first key (7) assigned to a said media object (6), it also obtains data about conditions of use (8) for this media object.

18. The communications terminal (1) according to one of the claims 16 or 17, wherein the said second decryption function (59) is designed such that it passes on the decrypted first key (7") in a protected way to the decryption module (14).

19. The communications terminal (1) according to one of the claims 16 to 18, wherein the key obtaining module (122) is designed such that it automatically obtains from the key server (3') the encrypted first key (7') on the basis of indications about the key server (3') which indications are contained in each case in the media object (6).

20. The communications terminal (1) according to one of the claims 13 to 19, wherein it comprises a billing module (123) which is designed such that, with the playback of the media content (62) of the media object (6), it debits a monetary amount assigned to this media object (6) against a prepaid monetary amount (51) stored on a chipcard (5) of the communications terminal (1).

21. The communications terminal (1) according to one of the claims 13 to 20, wherein it comprises a license module (52), which is designed such that it counts the number of playbacks of the media content (62) of the media object (6) in the communications terminal (1), and transmits this said number to a license server (4).

22. The communications terminal (1) according to one of the claims 13 to 21, wherein the memory means (12) comprise at feast certain memory areas on a chipcard (5), and the said private third key (9') is stored in the certain memory areas.

## Revendications

1. Procédé pour la commande et la transmission d'objets média numériques (6)
procédé dans lequel une commande d'objet pour des objets média numériques (6), laquelle comprend au moins un identifiant d'objet, est transmise par le biais d'un réseau de radiocommunication mobile (2) à une centrale (3) au moyen d'un terminal de communication (1),
procédé dans lequel des indications sur un moment déterminé par la centrale (3) auquel un objet média (6) commandé est disponible sont transmises par la centrale (3) au terminal de communication (1), le moment étant déterminé par la centrale (3) en considération d'une utilisation optimale des ressources employées lors de la transmission des objets média (6) commandés,
procédé dans lequel le moment déterminé par la centrale (3) est enregistré dans le terminal de communication (1),
procédé dans lequel le terminal de communication (1) contacte automatiquement la centrale (3) au moment enregistré,
procédé dans lequel un objet média (6) associé à l'identifiant d'objet est transmis par la centrale (3) par le biais d'un réseau de radiocommunication (2) au terminal de communication (1) où il est enregistré dans une mémoire (12), et
procédé dans lequel un module de lecture de média (13) du terminal de communication (1) restitue par le biais d'un support approprié un contenu média (62) contenu dans l'objet média (6) enregistré.

2. Procédé selon la revendication 1, **caractérisé en ce que** le contenu média (62) de l'objet média (6), avant la transmission au terminal de communication (1), est crypté avec une première clé (7) associée à cet objet média (6) et que le contenu média (62) est décrypté au moyen de cette première clé (7") avant la restitution par le module de lecture de média (13).

3. Procédé selon la revendication 2, **caractérisé en ce que** les objets média (6) enregistrés dans un premier terminal de communication (1) mentionné sont sélectionnés par l'utilisateur de ce premier terminal de communication (1) et transmis à un deuxième terminal de communication (1) mentionné, le contenu média (62) de ces objets média (6) restant crypté.

4. Procédé selon l'une des revendications 2 ou 3, **caractérisé en ce que** la première clé (7) associée à l'objet média (6) est transmise cryptée au moyen d'une deuxième clé publique (9) au terminal de communication (1) concerné où elle est décryptée au moyen d'une troisième clé privée (9'), la paire de clés composée de la deuxième clé publique (9) et de la troisième clé privée (9') étant associée à l'utilisateur du terminal de communication (1) concerné.

5. Procédé selon la revendication 4, **caractérisé en ce que** des indications sur les conditions d'utilisation (8) de cet objet média (6) sont également transmises au terminal de communication (1), séparément ou en même temps que la première clé (7) associée à l'objet média (6).

6. Procédé selon l'une des revendications 4 ou 5, **caractérisé en ce que** pour le décryptage du contenu média (62) de l'objet média (6), la première clé décryptée (7") associée à cet objet média (6) est transmise de manière sécurisée à un module de décryptage (14) du terminal de communication (1).

7. Procédé selon l'une des revendications 1 à 6, **caractérisé en ce que** les objets média (6) contiennent à chaque fois des indications sur la centrale (3) auprès de laquelle l'objet média (6) concerné peut être obtenu.

8. Procédé selon l'une des revendications 2 à 7, **caractérisé en ce que** les objets média (6) contiennent à chaque fois des indications sur un serveur de clés (3') auprès duquel peut être obtenue la première clé cryptée (7').

9. Procédé selon la revendication 8, **caractérisé en ce qu'**un module d'acquisition des clés (122) du terminal de communication (1) concerné demande à chaque fois la première clé cryptée (7') auprès du serveur de clés (3'), la réceptionne et l'enregistre.

10. Procédé selon l'une des revendications 1 à 9, **caractérisé en ce que** les objets média (6) contiennent à chaque fois des indications concernant le contenu média (62) de l'objet média (6), par exemple des indications de prix, des indications de titre, la durée de lecture ou un extrait.

11. Procédé selon l'une des revendications 1 à 10, **caractérisé en ce que** pour payer la lecture du contenu média (62) de l'objet média (6), un montant monétaire associé à cet objet média (6) est déduit d'un montant monétaire (51) prépayé enregistré sur une carte à puce (5) du terminal de communication (1) concerné.

12. Procédé selon l'une des revendications 1 à 11, **caractérisé en ce que** le nombre de lectures du contenu média (62) de l'objet média (6) dans le terminal de communication (1) concerné est compté et que ce nombre est transmis à un serveur de licence (4).

13. Terminal de communication mobile (1), lequel est configuré de manière à pouvoir recevoir des données diffusées par le biais de réseaux de radiocommunication (2) et lequel comprend au moins un processeur (11) et des moyens de mémorisation (12) reliés à celui-ci, au moins certains moyens de mémorisation (12) étant dimensionnés de telle manière qu'ils peuvent enregistrer les objets média numériques (6) reçus par le biais de ces réseaux de radiocommunication (2), le terminal de communication (1) étant configuré de telle sorte à pouvoir communiquer par la biais d'un réseau de radiocommunication mobile (2), le terminal de communication (1) comprenant un module de commande programmé (121) qui est configuré de telle manière à pouvoir transmettre par le biais du réseau de radiocommunication mobile (2) à une centrale (3) une commande d'objet pour des objets média numériques (6), laquelle comprend au moins un identifiant d'objet, et le terminal de communication (1) comprenant un module de lecture de média (13) qui est configuré de telle manière à restituer un contenu média (62) contenu dans l'un des objets média numériques (6), **caractérisé en ce**
**que** le module de commande (121) est configuré de telle sorte à recevoir et à enregistrer un moment déterminé par la centrale (3) et transmis au terminal de communication (1) auquel un objet média (6) commandé est disponible, et
**que** le module de commande (121) est configuré de telle sorte qu'il contacte automatiquement la centrale (3) au moment enregistré et enregistre dans les moyens de mémorisation (12) un objet média (6) associé à l'identifiant d'objet qui est transmis par la centrale (3) au terminal de communication (1) par le biais du réseau de radiocommunication (2).

14. Terminal de communication (1) selon la revendication 13, **caractérisé en ce qu'**il comprend un module de décryptage (14) qui est configuré de telle sorte qu'il décrypte le contenu média crypté (62') de l'objet média (6) au moyen d'une première clé (7) associée à cet objet média (6).

15. Terminal de communication (1) selon la revendication 14, **caractérisé en ce qu'**il comprend une fonction de transmission qui est configurée de telle manière à transmettre les objets média (6) enregistrés à un deuxième terminal de communication mobile (1) , le contenu média (62') de ces objets média (6) restant crypté.

16. Terminal de communication (1) selon l'une des revendications 14 à 15, **caractérisé en ce qu'**il comprend un module d'acquisition de clé (122) qui est configuré de telle sorte à acquérir une première clé (7) associée audit objet média (6) par le biais du réseau de radiocommunication (2) auprès d'un serveur de clés (3') et que le terminal de communication (1) comprend une deuxième fonction de décryptage (59) qui est configurée de telle manière à décrypter au moyen d'une troisième clé privée (9') la première clé (7') reçue qui est cryptée avec une deuxième clé publique (9), la paire de clés, composée de la deuxième clé publique (9) et de la troisième clé privée (9'), étant associée à l'utilisateur du terminal de communication (1).

17. Terminal de communication (1) selon la revendication 16, **caractérisé en ce que** le module d'acquisition des clés (122) est configuré de telle manière à obtenir également des indications sur les conditions d'utilisation (8) de cet objet média (6), séparément ou en même temps que la première clé (7) associée à cet objet média (6).

18. Terminal de communication (1) selon l'une des revendications 16 ou 17, **caractérisé en ce que** la deuxième fonction de décryptage (59) est configurée de telle sorte à transmettre la première clé décryptée (7") au module de décryptage de manière sécurisée.

19. Terminal de communication (1) selon l'une des revendications 16 à 18, **caractérisé en ce que** le module d'acquisition des clés (122) est configuré de telle sorte à obtenir automatiquement du serveur de clés (3') la première clé cryptée (7') sur la base des indications sur le serveur de clés (3'), lesquelles indications sont à chaque fois contenues dans l'objet média (6).

20. Terminal de communication (1) selon l'une des revendications 13 à 19, **caractérisé en ce qu'**il comprend un module de facturation (123) qui est configuré de telle sorte qu'il impute, lors de la restitution du contenu média (62) de l'objet média (6), un montant monétaire associé à cet objet média (6) à un montant monétaire (51) prépayé enregistré sur une carte à puce (5) du terminal de communication (1).

21. Terminal de communication (1) selon l'une des revendications 13 à 20, **caractérisé en ce qu'**il comprend un module de licence (52) qui est configuré de telle manière à compter le nombre de lectures du contenu média (62) de l'objet média (6) dans le terminal de communication (1) et à transmettre ce nombre à un serveur de licence (4).

22. Terminal de communication (1) selon l'une des revendications 13 à 21, **caractérisé en ce que** les moyens de mémorisation (12) comprennent au moins des emplacements mémoire spécifiques sur une carte à puce (5) et que la troisième clé privée (9') est enregistrée dans les emplacements mémoire spécifiques.
